# EUROPEAN PATENT SPECIFICATION

(11) **EP 1 187 676 B1**
(45) Date of publication and mention of the grant of the patent: **06.10.2004**
(21) Application number: 00937098.2
(22) Date of filing: 09.06.2000
(51) Int. Cl.: B01L 3/00, G01N 21/25, G01N 35/02

(54) **APPARATUS FOR CONDUCTING AN ASSAY**
APPARAT ZUR AUSFÜHRUNG VON TESTVERFAHREN
DISPOSITIF PERMETTANT DE MENER UNE ANALYSE

(30) Priority: 10.06.1999 GB 9913561
(43) Date of publication of application: 20.03.2002
(73) Proprietor: Provalis Diagnostics Limited, Deeside, Flintshire CH5 2NT (GB)
(72) Inventor: Andrewes, David, Farnham, Surrey GU9 8NN (GB); o'DELL, John Anthony, Fulham, London SW6 1JT (GB); Stevenson, Anthony, Chester CH4 8PT (GB); Curtis, John, Balderton, Chester CH4 9FL (GB); Gray, Adrian Richard, Vaughans Lane, Chester CH3 5XF (GB); Vessey, John Philip, East Horsley, Surrey KT24 5BT (GB); Fernando, Felix, Wokingham, Berks RG40 2LU (GB); Creswell, Mark, Broughton, Chester CH 40NW (GB); Percival, David Alan, Hawarden, Flintshire CH5 3HS (GB); Attridge, John Worthington, Ripley, Surrey CH23 6JR (GB)
(74) Representative: W.P. Thompson & Co.
(86) International application number: PCT/GB2000/002251
(87) International publication number: WO 2000/076663

(56) References cited:
- EP-A- 0 353 025
- WO-A-91/12515
- US-A- 3 523 737
- US-A- 3 837 746
- US-A- 4 482 251
- US-A- 5 800 784

## Description

The present invention relates to an apparatus for conducting an assay. More particularly it relates to a device suitable for use in assaying analytes, for example glycated protein, in a sample, such as for example, blood.

The applicant has devised an apparatus, instrument and device for conducting an assay as disclosed in WO 99/28038 (no prior art). The apparatus comprises a first inlet a second inlet, and an inlet port, said inlet port being movable relative to each of said first and second inlets such that the inlet port can be brought into liquid communication with each inlet in turn as required, said inlet port accommodating a filter means or a binder retaining means.

In use a sample is separated into a first component fraction and a second component fraction and the component fractions are assayed to determine the presence of one or more analytes in said sample fractions.

The component fractions are read in an instrument comprising a microprocessor operable via a keypad, one or more light emitters and one or more light detectors, a display and driver, an analogue to digital converter and means for connecting the instrument to a power source.

The apparatus takes the form of a carousel. It comprises a base portion having a plurality of chambers including first and second inlets, and a top portion which together with the base portion forms the carousel. A funnel portion comprising an inlet port is in liquid communication with said inlets.

In use the assay reagents are opened and added sequentially by the user such as a doctor or patient.

EPO 035 3025 discloses an apparatus for use in an assay consisting of a number of wells the bottom of which are covered with a porous filter used to separate a reaction product from reagents that provide the reaction product. The wells and filter can be displaced from a non-liquid flow connection to a liquid flow connection.

An inlet port, namely a bottom of a respection well can be brought into liquid communication with respection inlets to chambers which are filled with an absorbent material. The bottom of each well is provided with a filter and blocked either by a liquid lock or some other means. Both wells and filters are carried on an upper housing. In use the upper housing slides relation to the lower housing which is kept stationary (or vice versa).

It would be desirable to provide an apparatus for conducting an assay which is simpler to use and is less prone to user error. It would also be advantageous if such an apparatus could be produced cheaply.

According to the present invention there is provided an apparatus, for use in an assay in which a sample is presented to an instrument for reading a sample, comprising a first component including a first optical chamber having a first inlet and a second optical chamber having a second inlet, a second component comprising an inlet port accommodating a binder retaining means or a filter means, and a third component or components comprising a sample receiving chamber and at least one other chamber, said at least one other chamber containing an eluting medium, wherein said second component is slidably disposed below the sample receiving chamber of said third component and above the optical chambers of the first component, said inlet port being movable relative to each of said first and second inlets such that the inlet port can be brought into liquid communication with each inlet in turn as required along a linear path, whereby liquid is capable of flowing via the inlet port into the respective inlet. Additional features are set out in the dependent claims.

Preferably the apparatus takes the form of a cartridge.

To assemble and fill the apparatus the various components are assembled as follows:
1. The resilient component comprising, for example, three chambers is placed in the cover,
2. The plug closure pivots into place,
3. The assay liquids are poured into the 1st chamber, 2nd chamber and 3rd chamber,
4. The filter and/or binding means is located in the inlet port of the second component and this is slid into the third component,
5. The 1st component, including the 1st and 2nd inlets comprising optical chambers, is clipped into place, thus forming the cartridge.

Preferably the third component comprises a channel within which the second component slides.

The easier it is to use a product the more acceptable it is. By following a linear path the sequence of operations can be simplified to:
1. Unpack the cartridge;
2. Rest the cartridge on a surface and pull open the closure;
3. Take, for example, a blood sample using a loop;
4. Place the blood sample into the open chamber;
5. Replace the plug closure;
6. Shake the cartridge;
7. Insert the cartridge into an instrument.

The cartridge is designed to be inserted into the instrument in one orientation and is provided with locator lugs to ensure correct orientation.

According to a further aspect of the present invention there is provided an assembly comprising an instrument for reading a sample presented in an apparatus as defined in claim 19.

Preferably the instrument includes a filter for selecting a suitable wavelength.

The next series of steps are operated from the instrument. The instrument is designed such that at the completion of the testing the cartridge cannot be removed until returned to the start position. This is to seal the spent cartridge and to have the instrument ready for the next test.

The cartridge provides user simplicity. The cartridge benefits from the following features:

There is only one closure and this cannot be removed.

The first component, which is clear has a plurality of projecting fins on its side which give stability when loading the sample, and unsure correct orientation into the instrument and helps prevent fingerprinting the surface.

The filter is hidden, inaccessible and being totally enclosed is immune to violent shaking.

The liquids, their chambers and the filter slide surfaces are enclosed and are not easily contaminated.

In normal usage the user cannot unintentionally operate the cartridge until installed in the instrument.

In one embodiment the faces of the optical chambers can be curved.

The filter is fully aligned with the chamber apertures before air can enter. This means the product drops by gravity only when the chambers are fully aligned. The aim being fast emptying and agitation. The air tubes are positioned to allow this.

The disposable cartridge has only a few parts.

The cartridge benefits from a non-return snap together assembly.

The cartridge benefits from reduced size compared to a carousel, and can be easily packaged in multiples.

The construction means the cartridge is fully sealed for after-use disposal.

The construction allows for a possible reduction in instrument size.

The invention will be now described, by way of example only, with reference to the following figures in which:
Fig. 1 is a perspective view of a cartridge of the invention.
Fig. 2 is an exploded view showing the component parts of the cartridge of Fig. 1;
Fig. 3 is a cross section through the cartridge of Fig. 1; and
Figs. 4 to 7 show cross-sections of the cartridge in an instrument at various stages during an assay procedure.

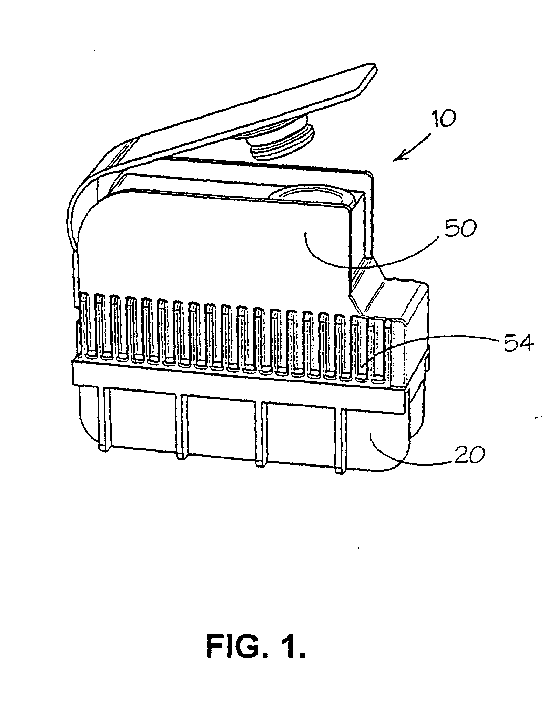

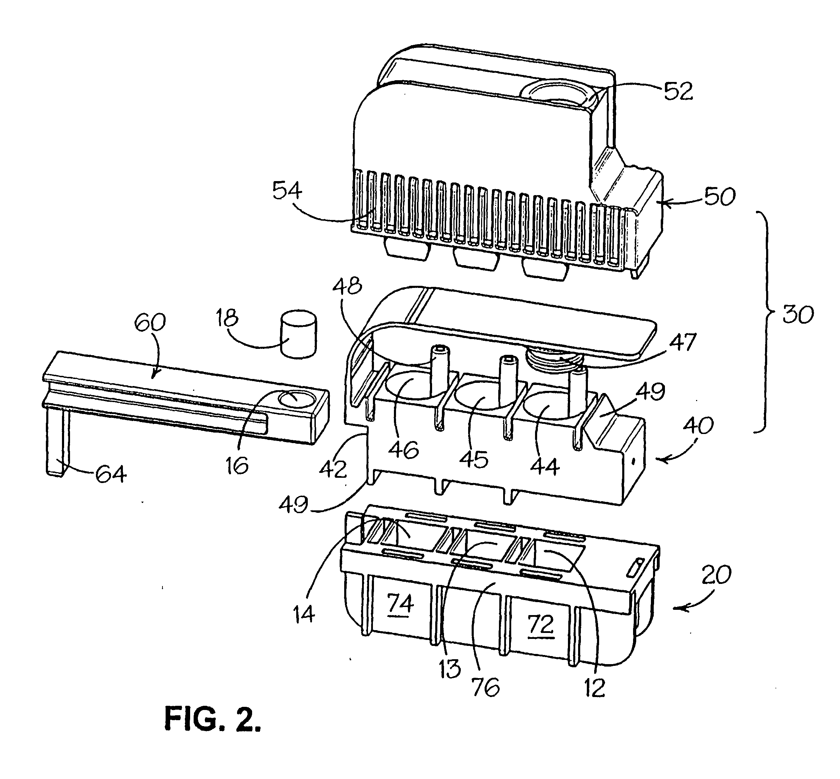

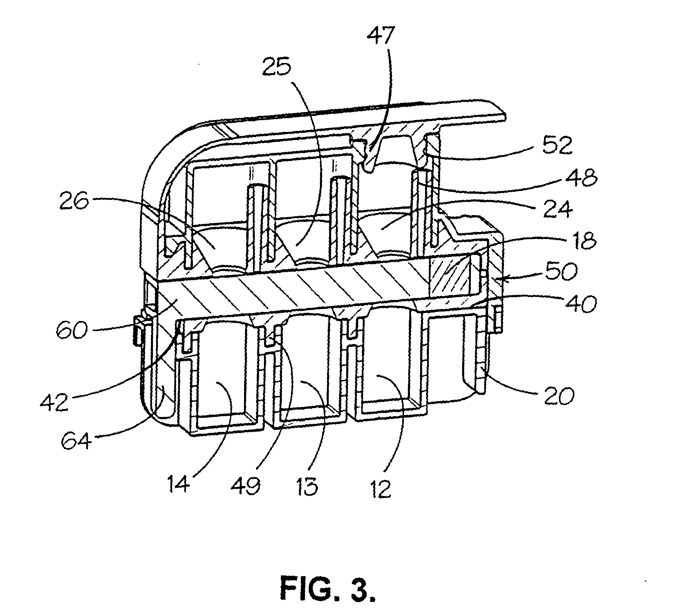

Referring to Figs. 1 to 3 the apparatus 10 takes the form of a cartridge. It comprises a first inlet 12, a second inlet 14 and an inlet port 16. The inlet port 16 comprises a filter 18 capable of retaining a binder retaining means.

The cartridge is constructed from a number of component parts. A first component part 20 is made of a clear material, for example, plastics, most preferably acrylic, and houses optical chambers 12 and 14. An additional chamber 13 is disposed between optical chambers 12 and 14 and functions as a wash chamber.

A third component 30 comprises two parts, a resilient component 40 and a cover 50.

The resilient component 40 comprises an elongate channel 42 (partially obscured) into which a second component 60 is slidably mounted. The second component comprises an inlet port 16 in which is housed a filter and/or binder retaining mean 18 and a handle 64.

To construct the cartridge 10 the resilient component 40, which is made of rubber, is placed into cover 50. The rubber component 40 comprises three openings 44, 45, 46, which extend into the elongate channel 42. These openings, which are closed to form sample receiving chambers 24, 25, 26 by slide component 60, house various assay liquids. In the case of an assay for determining glycated and non-glycated proteins in haemoglobin the resulting sample receiving chambers 24, 25, and 26 contain respectively,
1) a buffer and an amino phenylboronate agarose matrix,
2) a wash buffer, and
3) an eluting buffer.

Extending and pivoting from one end of the rubber component 40 is a closure lid 47 which seals an aperture 52 in the cover 50 which leads into the filling chamber 24. At the side of each chamber 24, 25 and 26 is an air relief tube 48 which co-operates with an aperture (not shown) in the slide 60 such that when the inlet port 16 is correctly aligned with each chamber 24, 25 and 26 the aperture is aligned with the associated air relief tube thereby causing an air lock to break thus causing release of the chamber contents through the filter into the inlet there below. The component 40 further comprises a plurality of mating members 49 which allow it to be connected to component parts 20 and 50.

The first component comprises windows 72 and 74 which are inset from the main cartridge surface 76. By having the article windows inset and having protecting fins 78 on either side of the windows, fingerprints, can be avoided and the component strengthened. The second component 60 is preferably "I" shaped in cross section so that it can run against a number of surfaces ensuring a good sealing and preventing leakage from the respective chambers. It also has a handle 64 which can be held in a reading instrument; preferably on the track on which the cartridge runs.

The cover 50, has a toothed surface 54 which teeth provide a means by which the cartridge can be caused to move along a cade 80 of a reading instrument.

To assemble and fill the cartridge the rubber component 40 is placed into the cover 50 and the plug closure 47 pivots to close aperture 52. The test liquids are then poured into the chambers 44, 45 and 46. The second component slide 60, with filter 18 then slid into the channel 42 of the rubber component 40 thereby sealing the chamber 44, 45 and 46. The first component is then clipped into place thereby completing assembly.

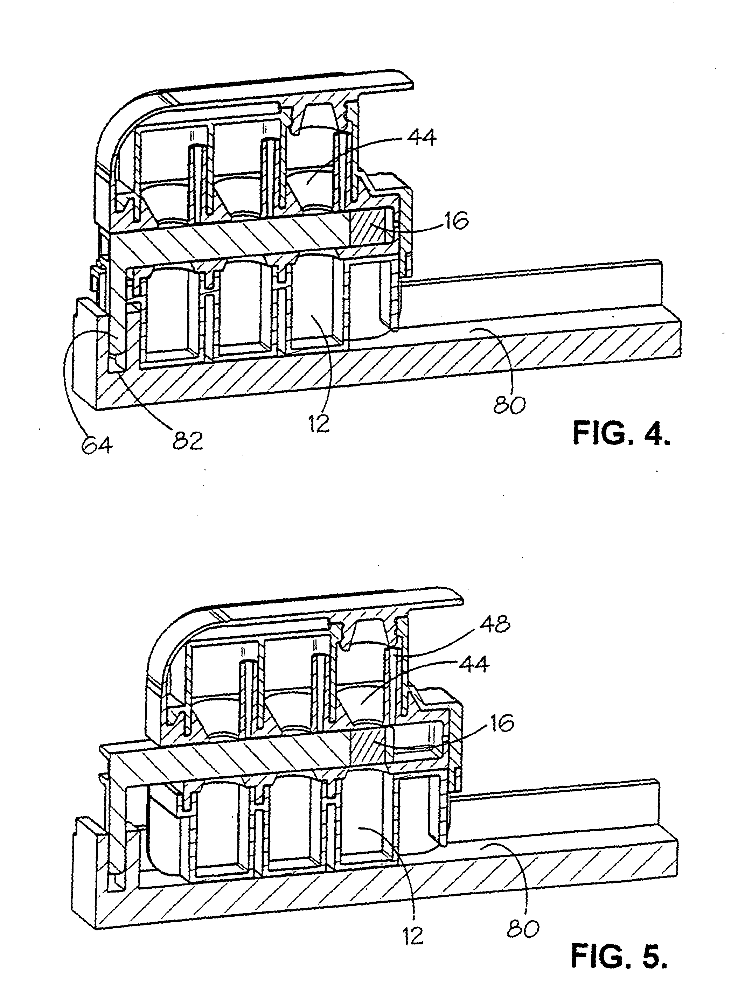

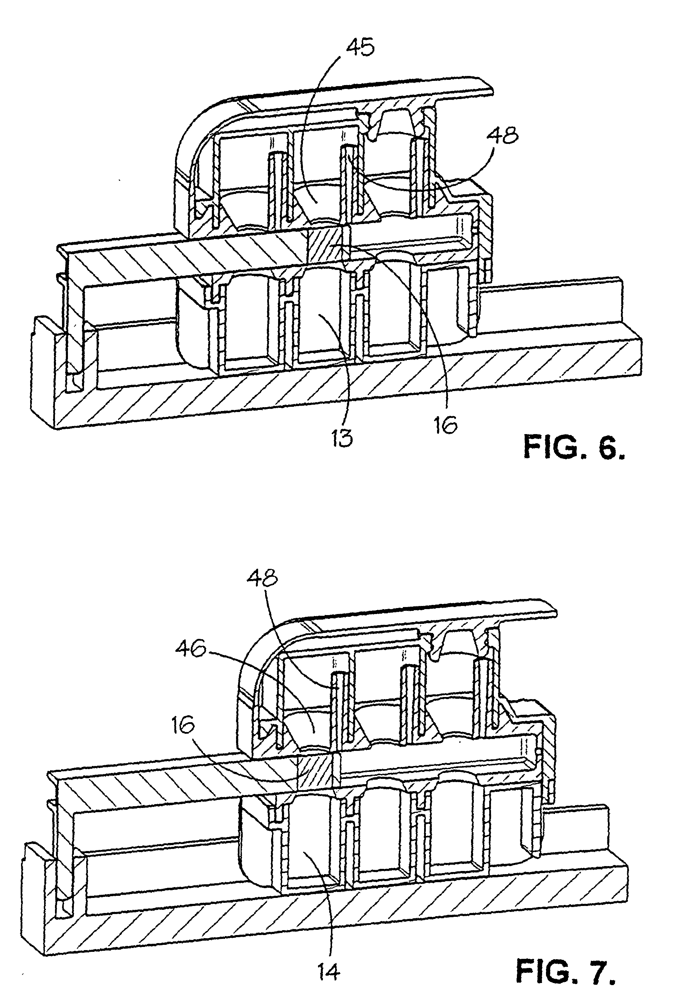

The device is used in an assay as follows:
1) The cartridge is unpacked and the closure 47 opened.
2) A finger-prick blood sample is collected into a loop and placed into chamber 44 through aperture 52. The chamber comprises a buffer and an amino phenyl boronate (aPBA) agarose affinity matrix. The chamber is closed and the cartridge inverted several times, causing the red blood cells to be lysed thus liberating the haemoglobin.
3) The tube is left for approximately 60-90 seconds, with occasional inversion, during which the glycated haemoglobin present in the sample binds to the aPBA affinity matrix.
4) During this time, the apparatus 10, which is designed to be disposable, is placed on the track 80 of an instrument which will read the samples and calculate and display the results (Fig. 4).
5) After about 60-90 seconds incubation, the inlet port 16 of the slide component is caused to move relative to the chambers 44, 45 and 46 and the corresponding chambers 12, 13, and 14. In fact the slide is held in position by locking handle 64 into a stop 82 on the track and the cartridge is caused to move along the track 80 by utilising the teeth 54 on the cover 50 to propel the cartridge.
6) When the inlet port 16 is aligned with the first inlet 12 and the first chamber 44 the first air relief tube 48 is caused to break releasing the contents of the first chamber 44 into contact with the filter 16. (Fig 5) The liquid contents of the chamber drain through the filter and are collected in the optical chamber 12. The aPBA affinity matrix, however, is too large to pass through the filter and therefore collects in the inlet port 16.
7) The liquid contents collect in the first optical chamber which contains the non-glycated haemoglobin present in the original sample, the aPBA affinity matrix collected in the inlet port 16 contains the glycated haemoglobin present in the original sample.
8) On completion of this first step, the instrument progresses to stage 2, which is accomplished by causing the cartridge to move along the track and stop at position 2 (Fig. 6). Again, under direction from the instrument the wash buffer from chamber 45 is released into chamber 13 via inlet port 16 and allowed to drain through. This step is to remove any non-specifically bound non-glycated haemoglobin from the aPBA affinity matrix that may be present from step 1.
9) The instrument progresses to stage 3 and the contents of the chamber 46 is released into chamber 14 via inlet port 16. The elution buffer removes the glycated haemoglobin from the aPBA affinity matrix. (Fig. 7).
10) During the above the instrument spectrophotometrically measures the absorbance of both the non-glycated and the glycated haemoglobin fractions present in the two optical chambers. Using an algorithm built into the instruments software, the % glycated haemoglobin present in the original whole blood sample is calculated and displayed on the display.
11) The apparatus returns to its starting position, is disconnected from the instrument and is discarded as biohazardous waste. The instrument is then ready to perform the next test.

Whilst the invention has been described with reference to an assay for determining the % levels of glycated haemoglobin, the skilled man will appreciate that the number of inlets and chambers and the assay liquids will vary for other assay systems.

## Claims

1. An apparatus (10), for use in an assay in which a sample is presented to an instrument for reading a sample, comprising a first component (20) including a first optical chamber (72) having a first inlet (12) and a second optical chamber (74) having a second inlet (14), a second component (60) comprising an inlet port (16) accommodating a binder retaining means or a filter means (18), and a third component (30) comprising a sample receiving chamber (44) and at least one other chamber (46), said at least one other chamber (46) containing an eluting medium, wherein said second component (60) is slidably disposed below the sample receiving chamber (44) of said third component (30) and above the optical chambers (72, 74) of the first component (20), said inlet port (16) being movable relative to each of said first and second inlets (12, 14) such that the inlet port (16) can be brought into liquid communication with each inlet (12, 14) in turn as required along a linear path, whereby liquid is capable of flowing via the inlet port into the respective inlet.

2. An apparatus as claimed in claim 1 which is in the form of a cartridge.

3. An apparatus as claimed in claim 1 or 2 in which the second component (60) seals the sample receiving chamber (44) of the third component so that liquids stored or pre-loaded into the chamber are only released when the inlet ports formed therein are aligned with the optical chambers (72, 74) in the first component.

4. An apparatus as claimed in claim 3 further comprising additional sealing means.

5. An apparatus as claimed in any of claims 1 to 4 in which the second component (60) is provided with a handle (64) or other means by which it can be moved.

6. An apparatus as claimed in any of claims 3 to 7 in which the third component (30) comprises two components: a resilient component (40) comprising the sample receiving chamber (44) and the at least one other chamber (46) and a cover (50).

7. An apparatus as claimed in claim 6, in which the resilient component (40) comprises a closure lid having a plug closure (47) for selectively sealing a filling chamber (24) in the cover for collecting a sample.

8. An apparatus as claimed in any of claims 1 to 7 in which the third component (30) comprises a channel within which the second component (60) slides.

9. An apparatus as claimed in any of the preceding claims further comprising locator lugs to ensure correct orientation in a measuring instrument.

10. An apparatus as claimed in any of claims 1 to 9 further comprising a plurality of fins projecting from the first component.

11. An apparatus as claimed in any of the preceding claims in which the optical chambers (72, 74) are curved.

12. An apparatus as claimed in any of the preceding claims wherein each chamber (44, 45, 46) of the third component (30) comprises an air relief tube (48) for enabling the release of the contents of each chamber through said inlet port of the second component (60).

13. An apparatus as claimed in any of claims 1 to 12 wherein the first component (20) is made of a clear material.

14. An apparatus as claimed in any of claims 6 to 13 wherein the resilient component (40) comprises an elongate channel into which the second component (60) is slidably mounted.

15. An apparatus as claimed in claim 12 wherein each air relief tube (48) co-operates with an aperture in the second component (60) such that when the inlet port is correctly aligned with each chamber the aperture is aligned with the associated air relief tube thereby causing an air lock to break thus causing release of the chamber contents through the filter means or binder retaining means into the inlet there below.

16. An apparatus as claimed in any one of the preceding claims wherein apparatus has a mainside surface and the first component comprises windows which are inset from the mainside surface.

17. An apparatus as claimed in any of claims 1 to 16 wherein the third component (30) is "I" shaped in cross section.

18. An apparatus as claimed in any of the preceding claims wherein the apparatus has a toothed surface (54) which teeth provide a means by which the apparatus can be caused to move along a track of a reading instrument.

19. An assembly comprising an instrument for reading a sample presented in an apparatus and an apparatus as claimed in any one of the preceding claims, the instrument comprising a microprocessor operable via a key pad, one or more light emitters and one or more light detectors, a display and driver, an analogue to digital converter, and means for connecting the Instrument to a power source, the instrument comprising an elongate track adapted to bring said apparatus into a reading position.

20. A device as claimed in claim 19 further comprising a filter for selecting a suitable wavelength.

## Patentansprüche

1. Vorrichtung (10) zum Gebrauch in einer Analyse, in der eine Probe einem Instrument zum Lesen einer Probe vorgelegt wird, umfassend eine erste Komponente (20), die eine erste optische Kammer (72) mit einem ersten Einlass (12) und eine zweite optische Kammer (74) mit einem zweiten Einlass (14 aufweist, eine zweite Komponente (60), die eine Einlassöffnung (16) aufweist, in der ein Binderhaltemittel oder ein Filtermittel (18) untergebracht ist, und eine dritte Komponente (30), die eine Probenaufnahmekammer (44) und mindestens eine andere Kammer (46) aufweist, wobei die genannte mindestens eine andere Kammer (46) ein Eluierungsmittel enthält, die genannte zweite Komponente (60) verschiebbar unter der Probenaufnahmekammer (44) der genannten dritten Komponente (30) und über den optischen Kammern (72, 74) der ersten Komponente (20) angeordnet ist, und die genannte Einlassöffnung (16) in bezug zu jedem des genannten ersten und zweiten Einlasses (12, 14) bewegbar ist, so dass die Einlassöffnung (16) mit jedem Einlass (12, 14) nacheinander wie erforderlich entlang eines linearen Wegs in Flüssigkeitskommunikation gebracht werden kann, wodurch Flüssigkeit über die Einlassöffnung in den jeweiligen Einlass fließen kann.

2. Vorrichtung nach Anspruch 1, die in Form einer Kassette vorliegt.

3. Vorrichtung nach Anspruch 1 oder 2, bei der die zweite Komponente (60) die Probenaufnahmekammer (44) der dritten Komponente so abdichtet, dass in der Kammer gelagerte oder vorher eingegebene Flüssigkeiten nur freigesetzt werden, wenn die darin ausgebildeten Einlassöffnungen mit den optischen Kammern (72, 74) in der ersten Komponente ausgerichtet sind.

4. Vorrichtung nach Anspruch 3, die ferner zusätzlich Abdichtungsmittel aufweist.

5. Vorrichtung nach einem der Ansprüche 1 bis 4, bei der die zweite Komponente (60) mit einem Griff (64) oder anderen Mittel versehen ist, durch das sie bewegt werden kann.

6. Vorrichtung nach einem der Ansprüche 3 bis 7, bei der die dritte Komponente (30) zwei Komponenten aufweist: eine elastische Komponente (40), die die Probenaufnahmekammer (44) und die mindestens eine andere Kammer (46) aufweist, sowie eine Abdeckung (50).

7. Vorrichtung nach Anspruch 6, bei der die elastische Komponente (40) einen Verschlussdeckel mit einem Stopfenverschluss (47) zum selektiven Abdichten einer Füllkammer (24) in der Abdeckung zum Sammeln einer Probe aufweist.

8. Vorrichtung nach einem der Ansprüche 1 bis 7, bei der die dritte Komponente (30) einen Kanal aufweist, in dem die zweite Komponente (60) verschoben wird.

9. Vorrichtung nach einem der vorhergehenden Ansprüche, die ferner Lokalisierungsansätze zur Sicherstellung von korrekter Ausrichtung in einem Messinstrument aufweist.

10. Vorrichtung nach einem der Ansprüche 1 bis 9, die ferner eine Mehrzahl von von der ersten Komponente vorstehenden Rippen aufweist.

11. Vorrichtung nach einem der vorhergehenden Ansprüche, in der die optischen Kammern (72, 74) gebogen sind.

12. Vorrichtung nach einem der vorhergehenden Ansprüche, bei der jede Kammer (44, 45, 46) der dritten Komponente (30) ein Entlüftungsrohr (48) zum Ermöglichen der Freisetzung der Inhalte jeder Kammer durch die genannte Einlassöffnung der zweiten Komponente (60) aufweist.

13. Vorrichtung nach einem der Ansprüche 1 bis 12, bei der die erste Komponente (20) aus einem durchsichtigen Material besteht.

14. Vorrichtung nach einem der Ansprüche 6 bis 13, bei der die elastische Komponente (40) einen länglichen Kanal aufweist, in dem die zweite Komponente (60) verschiebbar angebracht ist.

15. Vorrichtung nach Anspruch 12, bei der jedes Entlüftungsrohr (48) mit einer Öffnung in der zweiten Komponente (60) so zusammenwirkt, dass, wenn die Einlassöffnung korrekt mit jeder Kammer ausgerichtet ist, die Öffnung mit dem zugehörigen Entlüftungsrohr ausgerichtet ist, wodurch das Aufbrechen eines Luftverschlusses verursacht wird, was so die Freisetzung der Kammerinhalte durch das Filtermittel oder Binderhaltemittel in den darunter liegenden Einlass verursacht.

16. Vorrichtung nach einem der vorhergehenden Ansprüche, bei der die Vorrichtung eine Hauptseitenoberfläche aufweist und die erste Komponente Fenster aufweist, die von der Hauptseitenoberfläche eingesetzt werden.

17. Vorrichtung nach einem der Ansprüche 1 bis 16, bei der die dritte Komponente (30) einen "I"-förmigen Querschnitt aufweist.

18. Vorrichtung nach einem der vorhergehenden Ansprüche, wobei die Vorrichtung eine gezahnte Oberfläche (54) aufweist, welche Zähne ein Mittel bereitstellen, durch das die Vorrichtung veranlasst werden kann, sich entlang einer Spur eines Leseinstruments zu bewegen.

19. Baugruppe, die ein Instrument zum Lesen einer in einer Vorrichtung vorgelegten Probe und eine Vorrichtung nach einem der vorhergehenden Ansprüche aufweist, wobei das Instrument einen über ein Tastenfeld zu betätigenden Mikroprozessor, einen oder mehr Lichtemitter und einen oder mehr Lichtdetektoren, eine Anzeige und einen Treiber, einen Analog-Digital-Wandler, und Mittel zum Anschließen des Instruments an eine Energiequelle aufweist, wobei das Instrument eine längliche Spur aufweist, die ausgelegt ist, um die genannte Vorrichtung in eine Leseposition zu bringen.

20. Vorrichtung nach Anspruch 19, die ferner einen Filter zum Auswählen einer geeigneten Wellenlänge aufweist.

## Revendications

1. Appareil (10) à utiliser dans un dosage dans lequel un échantillon est présenté à un instrument pour faire le relevé d'un échantillon, comportant un premier élément (20) comprenant une première chambre optique (72) ayant une première entrée (12) et une deuxième chambre optique (74) ayant une deuxième entrée (14), un deuxième élément (60) comportant un orifice d'entrée (16) où est logé un moyen de retenue de liant ou un moyen filtre (18), et un troisième élément (30) comportant une chambre de réception d'échantillon (44) et au moins une autre chambre (46), ladite au moins une autre chambre (46) contenant un milieu d'élution, dans lequel ledit deuxième élément (60) est disposé, de façon à pouvoir glisser, en dessous de la chambre de réception d'échantillon (44) dudit troisième élément (30) et au-dessus des chambres optiques (72, 74) du premier élément (20), ledit orifice d'entrée (16) pouvant être bougé par rapport aux dites première et deuxième entrées (12, 14) de façon à ce que l'orifice d'entrée (16) puisse être amené en communication liquide avec chaque entrée (12, 14) l'une après l'autre comme il convient le long d'un parcours linéaire, ce qui fait que du liquide est capable de s'écouler, par l'orifice d'entrée, dans l'entrée respective.

2. Appareil tel que revendiqué dans la revendication 1 qui est sous la forme d'une cartouche.

3. Appareil tel que revendiqué dans la revendication 1 ou 2 dans lequel le deuxième élément (60) ferme de façon étanche la chambre de réception d'échantillon (44) du troisième élément de façon à ce que des liquides stockés ou pré-chargés dans cette chambre ne soient évacués que lorsque les orifices d'entrée formés à l'intérieur sont alignés avec les chambres optiques (72, 74) dans le premier élément.

4. Appareil tel que revendiqué dans la revendication 3, qui comprend également un moyen d'étanchéité supplémentaire.

5. Appareil tel que revendiqué dans l'une quelconque des revendications 1 à 4, dans lequel le deuxième élément (60) est pourvu d'une poignée (64) ou d'un autre moyen par lequel on peut le bouger.

6. Appareil tel que revendiqué dans l'une quelconque des revendications 3 à 7, dans lequel le troisième élément (30) comporte deux éléments : un élément élastique (40) comportant la chambre de réception d'échantillon (44) et la au moins une autre chambre (46) et un couvercle (50).

7. Appareil tel que revendiqué dans la revendication 6, dans lequel l'élément élastique (40) comporte un couvercle de fermeture ayant une fermeture par bouchon (47) pour fermer sélectivement de façon étanche une chambre de remplissage (24) dans le couvercle pour recueillir un échantillon.

8. Appareil tel que revendiqué dans l'une quelconque des revendications 1 à 7 dans lequel le troisième élément (30) comporte un canal à l'intérieur duquel le deuxième élément (60) glisse.

9. Appareil tel que revendiqué dans l'une quelconque des revendications précédentes, qui comporte également des oreilles de positionnement pour assurer l'orientation correcte dans un instrument de mesure.

10. Appareil tel que revendiqué dans l'une quelconque des revendications 1 à 9, qui comporte également plusieurs ailettes faisant saillie du premier élément.

11. Appareil tel que revendiqué dans l'une quelconque des revendications précédentes, dans lequel les chambres optiques (72, 74) sont incurvées.

12. Appareil tel que revendiqué dans l'une quelconque des revendications précédentes, dans lequel chaque chambre (44, 45, 46) du troisième élément (30) comporte un tube d'évacuation d'air (48) pour permettre l'évacuation du contenu de chaque chambre par ledit orifice d'entrée du deuxième élément (60).

13. Appareil tel que revendiqué dans l'une quelconque des revendications 1 à 12, dans lequel le premier élément (20) est fait en un matériau transparent.

14. Appareil tel que revendiqué dans l'une quelconque des revendications 6 à 13, dans lequel l'élément élastique (40) comporte un canal allongé dans lequel le deuxième élément (60) est monté de façon à pouvoir glisser.

15. Appareil tel que revendiqué dans la revendication 12, dans lequel chaque tube d'évacuation d'air (48) coopère avec une ouverture dans le deuxième élément (60) de façon à ce que, lorsque l'orifice d'entrée est aligné correctement avec chaque chambre, l'ouverture est alignée avec le tube de dégagement d'air associé, entraînant ainsi la rupture d'un bouchon d'air, causant ainsi l'évacuation du contenu de la chambre, par le moyen filtre ou par le moyen de retenue de liant, dans l'entrée en dessous.

16. Appareil tel que revendiqué dans l'une quelconque des revendications précédentes, dans lequel l'appareil a une surface de côté principal et le premier élément comporte des fenêtres qui sont encastrées depuis la surface du côté principal.

17. Appareil tel que revendiqué dans l'une quelconque des revendications 1 à 16, dans lequel le troisième élément (30) a une coupe transversale en forme de 'I'.

18. Appareil tel que revendiqué dans l'une quelconque des revendications précédentes, dans lequel l'appareil a une surface dentée (54), lesquelles dents fournissent un moyen par lequel on peut faire bouger l'appareil le long d'une piste d'un instrument de lecture.

19. Ensemble comportant un instrument pour lire un échantillon présenté dans un appareil et appareil tel que revendiqué dans l'une quelconque des revendications précédentes, cet instrument comprenant un microprocesseur qui peut être commandé par un bloc de touches, un ou plusieurs émetteurs de lumière et un ou plusieurs détecteurs de lumière, un affichage et un pilote, un convertisseur analogique-numérique et un moyen pour connecter l'instrument à une source d'alimentation, cet instrument comportant une piste allongée pour amener ledit appareil dans une position de lecture.

20. Dispositif tel que revendiqué dans la revendication 19, qui comporte également un filtre pour sélectionner une longueur d'onde appropriée.
